# EUROPEAN PATENT APPLICATION

(11) **EP 3 613 487 A1**
(43) Date of publication of application: **26.02.2020**
(21) Application number: 19382721.9
(22) Date of filing: 22.08.2019
(51) Int. Cl.: B01D 21/00, B01D 21/04, B01D 21/02, B01D 21/24, B03D 1/14

(54) **SYSTEM FOR REMOVING DECANTED PRODUCTS IN A HIGH HYDRAULIC LOAD DISSOLVED AIR FLOTATION WATER TREATMENT SYSTEM**

(30) Priority: 22.08.2018 ES 201831302 U
(71) Applicant: TECNOQUIMICA EXTERIOR, S.A.U. (TECEXSA), 20850 MENDARO (Gipuzkoa) (ES)
(72) Inventor: Atxurra Uriguen, Josu, 20850 (ES); Salutregui Armas, José Manuel, 20850 (ES)
(74) Representative: Herrero & Asociados, S.L.

(57) **Abstract**

The present invention relates to a high hydraulic load dissolved air flotation water treatment system, comprising a tank (10) with at least one aggregation area (11) and another clarification area (12) provided with lamellae (12a) and, on the surface thereof, a sludge collecting carriage (9), characterized in that the sludge collecting carriage is provided with at least a surface scraper (9a) and a lower scraper (9b), wherein the lower scraper is divided into different sections. The invention allows solving the problem relating to the collection of sludge both on the surface and at the bottom, such that the system operator does not have to stop the flotation system to keep the bottom of the clarified area in suitable conditions of cleanliness.

## Description

### Field of the Art

The invention belongs to the water treatment sector, particularly to dissolved air flotation clarification systems.

### Background of the Invention

In any type of water containing non-dissolved particles (wastewater, drinking water, sea water, industrial water, etc.), suspended solid particles tend to settle (decant) at the bottom of the receptacle or float according to their density. During decantation, the water flow to be treated is an ascending flow, such that solids gradually accumulate at the bottom of the receptacle due to specific density while clarified water is collected in the upper part of the receptacle.

In turn, dissolved air flotation (DAF) systems separate particles suspended in contaminated water by means of air microbubbles. In this case, unlike in decantation, the separated solids are collected on the surface and the clarified water is collected in the lower part. The microbubbles adhere to the suspended solids as they travel upwards floating to a separation system on the surface. The DAF equipment tank or receptacle for purifying plants with oversaturation is divided into two chambers or compartments. The first chamber is referred to as a contact area and the second a separation/clarification area; both chambers are separated by a deflector or baffle. The purpose of the contact area is to facilitate the collision and bonding of the particles of floc (aggregate of suspended solids and chemical reagents which favor flotation) and the air microbubbles. Air microbubbles with attached flocs are called microbubble-floc aggregates. The water entrains the suspension of aggregates, free microbubbles, and unbound flocculent particles to the second chamber, the separation area. In this area, the free bubbles and the aggregates can move up to the surface of the tank due to the low density of the microbubble-air aggregate and the lifting force of the air microbubbles. A floating layer made up of a mixture of bubbles and flocculent particles that were entrained by the former is formed on the surface of the tank. Over time this surface layer becomes concentrated, producing sludge, referred to as ooze or mud, which is removed from the tank by means of a surface sweeping system. The clarified water is extracted from the lower part of the tank and part of this water enters the system again as a recirculation flow.

It just so happens that although the designed system is the dissolved air flotation system, the water to be treated carries particles that do not readily float and tend to accumulate at the bottom of the clarification area of the DAF.

Current DAF systems referred to as high hydraulic load systems are provided at the bottom with clarified water extraction systems, such as perforated tubes or a false bottom, in order to produce a laminar water flow, reducing turbulence and favoring the clarification process in the flotation area. It is impossible for these high hydraulic load systems to have bottom cleaning systems, because the known mechanical sweeping elements favor the obstruction of holes distributed on the surface of the bottom of the DAF through which the clarified water should come out.

Another common system for reducing turbulences and enabling the design of a high load DAF is the use of lamellae submerged in the clarification area. The structure supporting said lamellae is anchored at the bottom of the clarification area and prevents cleaning the bottom. Therefore, at present, the cleaning of the bottom of the DAF requires stopping same, emptying same through the purging/emptying areas, and extracting the sludge accumulated in the clarified area using manual means. It should also be mentioned that solids accumulate in the first chamber of the DAF referred to as the aggregation area.

### Summary of the Invention

The object of the present invention is to provide a water treatment system, of the high hydraulic load type and dissolved air flotation (i.e., with lamellae), which allows solving the problem relating to the collection of sludge both on the surface and at the bottom. Thereby, the system operator does not have to stop the flotation system to keep the bottom of the clarified area in suitable conditions of cleanliness. The cleaning operation can furthermore be performed with the subsequent savings in costs. To that end, the water treatment system of the invention comprises a treatment tank separated into an aggregation area and another area with lamellae. Water enters from top to bottom and clarified water leaves through the lower part of the lamellar chamber. A surface sludge sweeping system is complemented with a bottom sweeping system separated into sections, which is arranged out of the way of the supports of the lamellar structure. The surface sweeping system is made up of a carriage with means for translation, preferably in two dimensions, on the surface of the tank (i.e., the width and length thereof) and one or more scrapers on each side. The bottom sweeping system is height adjustable.

### Brief Description of the Drawings

For the purpose of helping to better understand the features of the invention and for complementing this description, the following illustrative and non-limiting drawings are attached as an integral part thereof:
Figure 1 shows a diagram of the invention (side view).
Figure 2 is a detail of the carriage and the scrapers.

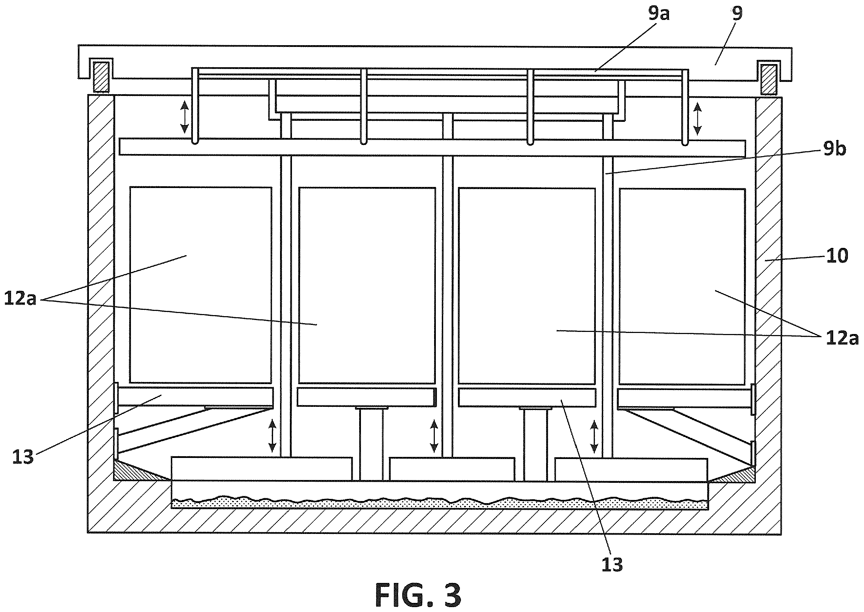

Figure 3 shows how the lower scraper is adapted, as a result of its sections, to the posts holding the lamellae.

### Detailed Description

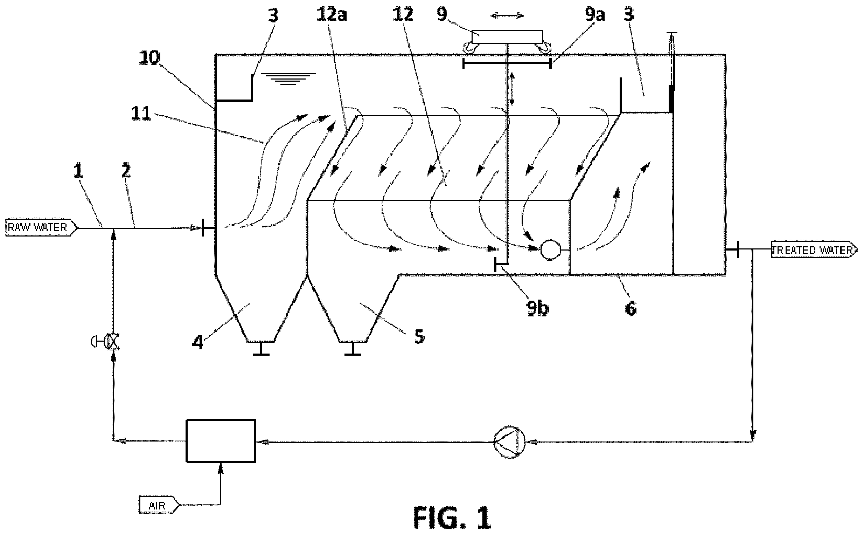

In reference to Figure 1, the system comprises a conduit 1 for the raw water to be treated and a treatment tank 10. The raw water inlet conduit 1 receives the recirculation of air-saturated clarified water leaving the DAF to create microbubbles in an already known method. In that sense, branch 2 extends to a first area referred to as an aggregation area 11. In the aggregation area, the flocculated particles bind to the microbubbles. This mixture flows to the clarification chamber 12 where the lamellae 12a are located. The flow is an ascending flow in chamber 11, and a descending flow in the clarification chamber 12.

The dissolved air flotation separation effect occurs in the aggregation area 11 where the flocculated particles are mixed with air (microbubbles). The upper scraper or scrapers 9a associated with translational carriage 9 move along the surface and drag the sludge to one or more collection channels 3. Once the aeration process has ended and the water has gone through the lamellae, it leaves through chamber 6 via a submerged spillway or a leading-in collector.

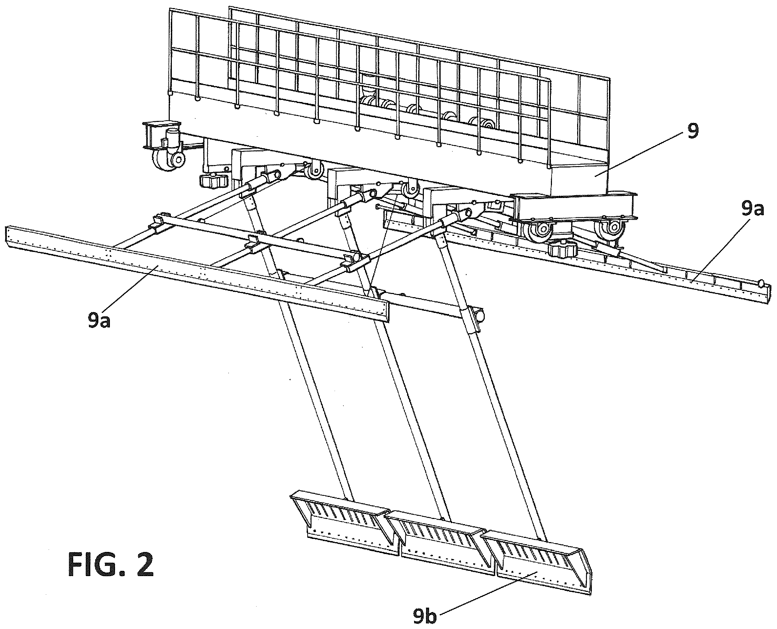

Since heavy, non-floating aggregates that gradually accumulate on the surface of the bottom of the tank are also produced, the invention is furthermore provided with a bottom sweeping scraper or lower scraper 9b. The lower scraper 9b is arranged out of the way of the lamellar structure installed for collecting both surface sludge and the decanted product (Figure 2). To that end, it is divided into segments so as to be out of the way of the posts 13 for holding the packets of lamellae 12a placed widthwise inside the tank 10 (width of the tank being understood as the direction perpendicular to the entry of water, which would be the longitudinal dimension). The packets of lamellae are placed on supports having the same width as said packet, but the supports are anchored either to the bottom of the tank 10 or to the side walls thereof by means of narrower posts, leaving space for the segments of the lower scraper. The segments of the lower scraper are provided with a lifting mechanism. The sludge dragged by this system is discharged through purging holes 4 and 5.

In view of this description and drawings, one skilled in the art will be able to understand that the invention has been described according to several preferred embodiments thereof, but that multiple variations can be introduced in said preferred embodiments without exceeding the object of the invention as claimed.

## Claims

1. High hydraulic load dissolved air flotation water treatment system, comprising a tank (10) with at least one aggregation area (11) and another clarification area (12) provided with lamellae (12a) and, on the surface thereof, a sludge collecting carriage (9), **characterized in that** the sludge collecting carriage is provided with at least a surface scraper (9a) and a lower scraper (9b), wherein the lower scraper is divided into different sections.

2. Dissolved air flotation water treatment system according to claim 1, **characterized in that** the sludge collecting carriage (9) is provided with means for translation in two dimensions corresponding to the width and length of the tank.

3. Dissolved air flotation water treatment system according to claim 1 or 2, **characterized in that** the lower scraper (9b) is height adjustable.
